# EUROPEAN PATENT APPLICATION

(11) **EP 2 113 474 A1**
(43) Date of publication of application: **04.11.2009**
(21) Application number: 08075326.2
(22) Date of filing: 29.04.2008
(51) Int. Cl.: B65G 17/06, B65G 47/66

(54) **Hybrid conveyor belt**

(71) Applicant: Ashworth Belts B.V., 7547 TC Enschede (NL)
(72) Inventor: Van Faassen, Willem, 7556 LN Hengelo (NL)
(74) Representative: 't Jong, Bastiaan Jacob

(57) **Abstract**

The invention relates to a conveyor belt (1) comprising:
- a plurality of substantially parallel metal rods (7),
- a plurality of metal links (8) interconnecting the rods (7),
- a plurality of plastic deck elements (5), each having two parallel longitudinal holes (6) and having a support surface, wherein the parallel metal rods (7) extend through the longitudinal holes (6) and wherein the links (9) are arranged on each end of the rods (7).

## Description

The invention relates to conveyor belts and especially conveyor belts, which are suitable to be used in environments of elevated temperature. Such conveyor belts are for example used in pasteurization devices. The conveyor belt conveys the products to be pasteurized into a chamber of high temperature. Due to the high temperature the belt increases both in length and in width.

For such high temperature environments, full metal belts can be used. The increase in length and in width is negliable, but with such belts it is difficult to transfer products from the full metal belt onto a second belt. Metal belts can only reasonably be made as fully flat belts having a spiral deck. In order to transfer products from such a belt onto another belt, the belt will have to go over a turning roll, and the other belt has to go as close as possible along the turning roll. There will always be a gap between both conveyor belts. This gap can be reduced by arranging a transfer plate in between, but still products can get stuck at the transition points or can fall due to the unequal transition.

It is known to use full plastic belts for such applications. Plastic belt elements are relatively light and can easily be shaped to any desirable shape. In the known plastic belts, the elements are provided with ribs extending in longitudinal direction of the conveyor belt. These ribs enable the use of a comb having a number of fingers, extending between the ribs. This provides for a transfer zone for products having no gaps and consequently products can be transferred reliably. The disadvantage of full plastic belts is the high elongation ratio when subjected to heat. The elongation ratio of plastic is about six times higher than steel. Although it is possible to compensate for the increase in length and width of the belt it self, it is difficult to take into account this elongation at the transfer area. At startup of a pasteurization device both the conveyor belt and the comb are cold. During use only the conveyor belt will heat up and thus the width of the conveyor belt will increase, while the comb will keep its original dimensions. This will provide problems.

A plastic belt has further disadvantages. Products, especially glass bottles could break during pasteurization. This broken glass will damage the plastic belt elements, such that exchange of belt elements is regularly necessary. Also the increase heat will speed up the deterioration process of the plastic, decreasing the life span of the belt.

It is an object of the invention to provide a conveyor belt having both the advantages of the metal belts and the plastic belts.

This object is achieved according to the invention by a conveyor belt comprising:
- a plurality of substantially parallel metal rods,
- a plurality of metal links interconnecting the rods,
- a plurality of plastic deck elements, each having two parallel longitudinal holes and having a support surface,
wherein the parallel metal rods extend through the longitudinal holes and wherein the links are arranged on each end of the rods.

With this conveyor belt according to the invention a metal carcass is provided on which plastic deck elements are arranged. The metal carcass ensures that elongation due to heath is minimized, while the plastic deck elements have the advantage, that they can be shaped as desired. Because the rods extend through the plastic deck elements, these elements can elongate as necessary, while the full width of the belt is kept substantially constant.

In an embodiment of the invention each plastic deck element is flanked by at least two metal links. The metal links provide the strength of the belt. By providing links on each side of a deck element, the forces can be distributed uniformly over the width of the belt.

In another embodiment of the conveyor belt according to the invention, the links comprise slot shaped openings in which the metal rods extend. Due to the slot shaped openings, the rods can move relative to the links, which provides better possibilities for cleaning the belt.

Preferably, at both ends of a rod a head is arranged for locking the links on the rod. The links and the deck elements can shift in direction of the rods, also increasing the cleanability of the belt.

In an embodiment according to the invention the plastic deck elements are disconnectable from the rods and the interconnecting links.

In a preferred embodiment the longitudinal holes of each plastic deck element are slots for accommodating the rods, said slots opening downwardly, perpendicular to the support surface of the deck element. With the slots shaped opening, the deck elements can be exchanged, without disassembling the metal carcass of the belt. So if one of the deck elements is damaged, this element can quickly be exchanged without substantial downtime of the belt.

In yet another preferred embodiment of the conveyor belt according to the invention the slots have an L-shaped cross-section. The L-shaped slot provide a secure attachment of the deck elements. Only when the rods are urged towards each other, the deck elements can be removed from the belt.

In still another preferred embodiment each plastic deck element comprises a number of ribs extending in longitudinal direction of the conveyor belt and forming the support surface. These ribs make a seamless transfer of products onto another belt possible.

The invention also relates to a combination of a conveyor belt according to the above mentioned embodiment and a transfer device for transferring products from the conveyor belt, which transfer device comprises comb elements having a number of fingers forming a support surface, which fingers extend between the ribs of a deck element. These comb elements provide the seamless transfer.

In a preferred embodiment of the combination the support surface of the fingers is substantially in line with the support surface of the deck element.

In yet another embodiment of the combination the width of a comb element is substantially equal to the width of a deck element.

These and other advantages of the invention will be further elucidated in conjunction with the accompanying drawings.
Figure 1 shows in perspective view an embodiment of the conveyor belt according to the invention.
Figure 2 shows the embodiment according to figure 1 from a different view point.
Figure 3 shows in perspective view a conveyor belt according to figure 1 with a transfer device.

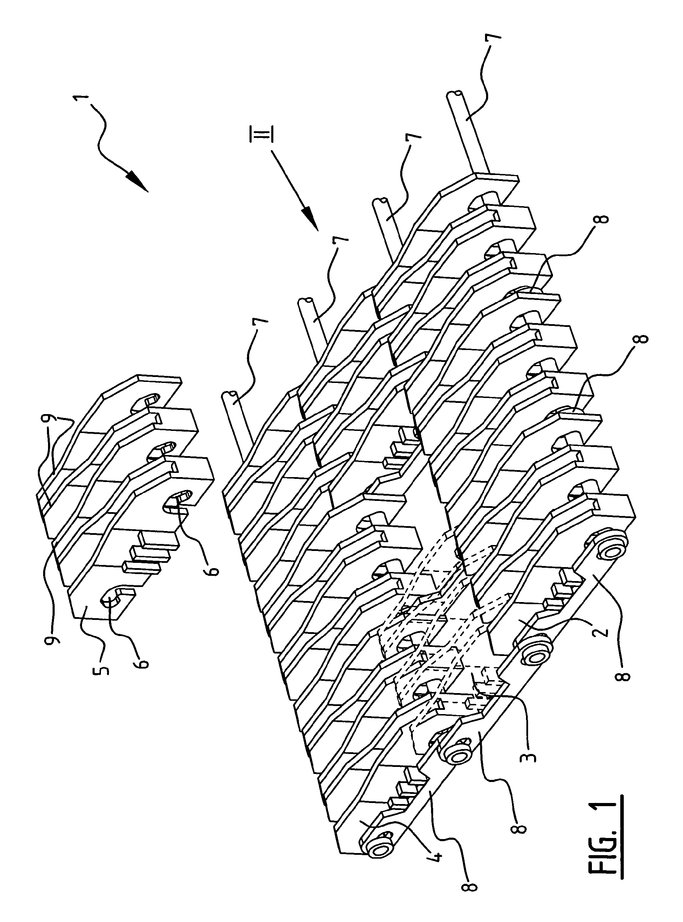

Figure 1 shows in perspective view a part of a conveyor belt 1 according to the invention. Shown are three rows 2, 3, 4 of plastic deck elements 5. Each deck element 5 has two longitudinal holes 6 through which rods 7 extends to interconnect the several deck elements 5. Between each plastic deck element 5 metal links 8 are arranged, which also have openings through which the rods 7 extend.

Each plastic deck element has ribs 9, which extend in substantially longitudinal direction of the conveyor belt. The holes 6 are L-shaped slots, which make it possible to exchange a plastic belt element 5 without dis-assembling the metal structure of the conveyor belt 1, which is comprised of the rods 7 and links 8.

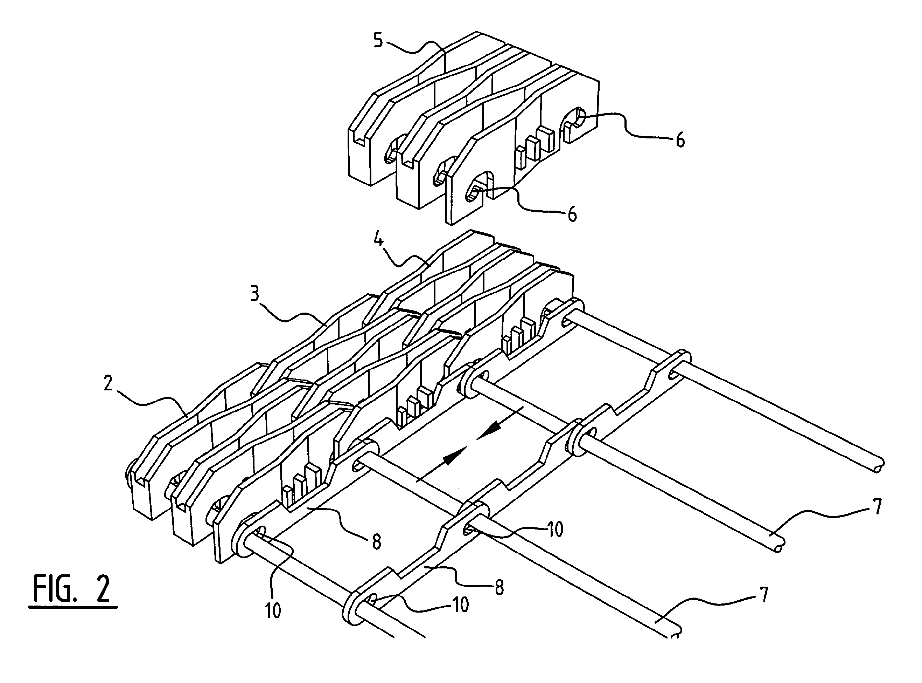

Especially from figure 2 it is clear that the L-shaped slots 6 make it possible to arrange a plastic deck element 5 on the rods 7. In order to achieve this the rods 7 have to be pulled towards eachother such that the rods 7 are registered with the downwardly opening slots 6. In order to facilitate movement of the rods 7 towards eachoter also the links 8 are provided with slot shaped openings 10.

The slot shaped openings 10 are not always necessary. If a number of plastic deck elements are arranged between two links 8, than the rods could be flexible enough to at least remove one of the middle plastic deck elements 5 from the conveyor belt 1.

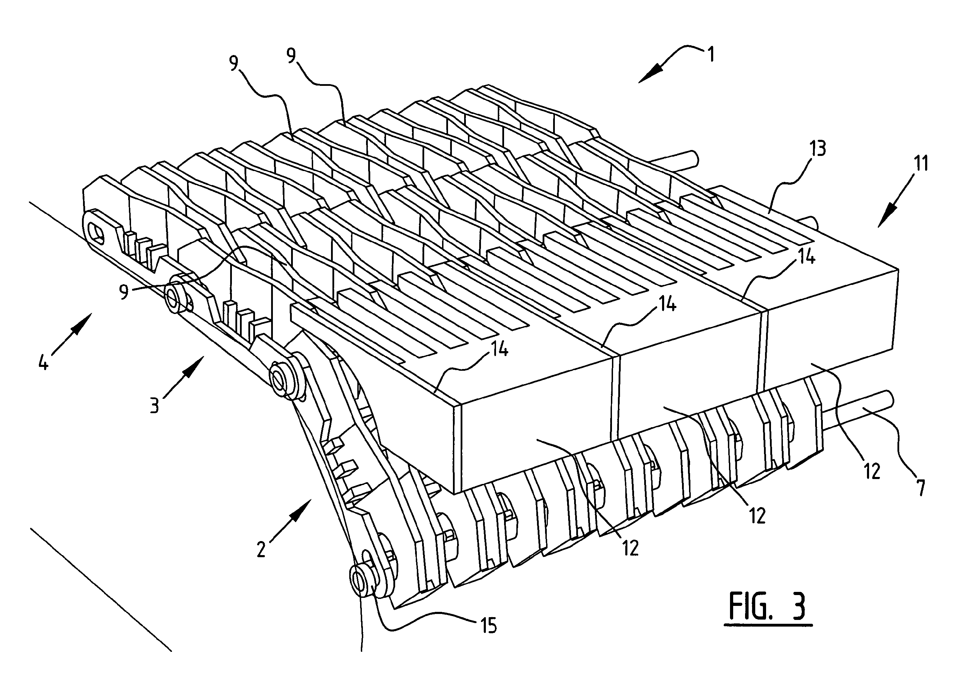

Figure 3 shows the conveyor belt 1 according to figure 1 at a turning position, in which rows 2 of deck elements 5 move downwardly to return to the starting point of the conveyor belt 1. In order to transfer products supported by the deck elements 5, a transfer device 11 is arranged. This transfer device 11 comprises comb elements 12 which are each provided with fingers 13. The comb elements 12 are spaced apart by metal plate elements 14. The fingers 13 extend between the ribs 9 of the plastic deck elements 5. The top surface of the comb elements 12 are substantially in line with the top surfaces of the ribs 9. So a product supported by the deck elements 5 will be transferred, without interruption onto the comb elements 12.

As the width of the conveyor belt 1 is limited by the rods 7 and the button heads 15 on each end of the rods 7, heating of the conveyor belt 1 will not result in substantial elongations. The transfer device 11, which generally stays cool, will keep its width and as the width of the conveyor belt 1 is limited, the fingers 13 will be maintained between the ribs 9 of the deck elements 5, without any problems.

## Claims

1. Conveyor belt comprising:
- a plurality of substantially parallel metal rods,
- a plurality of metal links interconnecting the rods,
- a plurality of plastic deck elements, each having two parallel longitudinal holes and having a support surface,
wherein the parallel metal rods extend through the longitudinal holes and wherein the links are arranged on each end of the rods.

2. Conveyor belt according to claim 1, wherein the plastic deck elements are disconnectable from the rods and interconnecting links.

3. Conveyor belt according to claim 1 or 2, wherein each plastic deck element is flanked by at least two metal links.

4. Conveyor belt according to any of the preceding claims, wherein the links comprise slot shaped openings in which the metal rods extend.

5. Conveyor belt according to any of the preceding claims, wherein at both ends of a rod a head is arranged for locking the links on the rod.

6. Conveyor belt according to any of the preceding claims, wherein the longitudinal holes of each plastic deck element are slots for accommodating the rods, said slots opening downwardly, perpendicular to the support surface of the deck element.

7. Conveyor belt according to claim 6, wherein the slots have an L-shaped cross-section.

8. Conveyor belt according to any of the preceding claims, wherein each plastic deck element comprises a number of ribs extending in longitudinal direction of the conveyor belt and forming the support surface.

9. Combination of a conveyor belt according to claim 8 and a transfer device for transferring products from the conveyor belt, which transfer device comprises comb elements having a number of fingers forming a support surface, which fingers extend between the ribs of a deck element.

10. Combination according to claim 9, wherein the support surface of the fingers is substantially in line with the support surface of the deck element.

11. Combination according to claim 9 or 10, wherein the width of a comb element is substantially equal to the width of a deck element.
